# EUROPEAN PATENT APPLICATION

(11) **EP 1 187 400 A2**
(43) Date of publication of application: **13.03.2002**
(21) Application number: 01119250.7
(22) Date of filing: 09.08.2001
(51) Int. Cl.: H04L 12/56, H04Q 11/00

(54) **Method and system for routing packets over parallel links between neighbor nodes**

(30) Priority: 09.08.2000 JP 2000240544
(71) Applicant: NEC CORPORATION, Tokyo (JP)
(72) Inventor: Yamada, Kenshin, NEC Corporation, Tokyo (JP); Miyao, Yasuhiro, NEC Corporation, Tokyo (JP)
(74) Representative: Betten & Resch

(57) **Abstract**

In a communications network formed by routers interconnected by parallel component links, hello packets are exchanged between neighbor routers at intervals to know each other in a learning process and update their status. Each router groups the parallel component links into a bundled link according to a link-up or link-down request and produces a first database mapping the relationships between component links and bundled links. The router performs routing calculations according to a link state routing algorithm using the bundled link as a unit of transmission medium and produces a second database mapping relationships between destination addresses and bundled links. The first and second databases are downloaded to interface units connected to the parallel component links. When a data packet is received, the databases are used for translating the header of the data packet for allowing it to be routed through a switch for transmission.

## Description

### Field of the Invention

The present invention relates generally to routing of packets in a communications network and more specifically to routing of packets in an IP (Internet Protocol) network where a plurality of parallel transmission links are provided between neighbor routers (nodes).

### Description of the Related Art

The amount of traffic in the IP network is doubled every four to eight months. In order to carry this increasing IP traffic, the routers introduced to the North American backbone IP network have an increased capacity and an increased speed to such an extent that the speed of line interface is approaching its limit comparable to the level of OC-192 (10 Gbps). Owing to the recent advance in wavelength division multiplexing (WDM) technology, however, the number of logical links between routers is expected to increase further.

In the IP backbone network, routing tables are created and autonomously updated by individual routers by reporting their current status with neighbor nodes according to the routing protocol, which is classified into the link state protocol and the distant vector protocol. In the backbone network of internet service providers, the link state type such as OSPF (Open Shortest Path First) and IS-IS (Intermediate System to Intermediate System) is employed. According to the link-state routing algorithm, neighbor routers exchange hello packets to identify their neighbors. In a subsequent learning process, known as flooding, each router transmits an LSA (link state advertisement) packet to all of its neighbors to advertise all of their status information and receives an LSA packet from each of its neighbors and retransmits it to every other neighbor. In this learning process, flooding is repeated so that each router in a given area creates a database of its relationships with all neighbor routers of the area. Once a database is created, the router proceeds to calculate a shortest path first (SPF) tree using the router itself as the root of the tree with shortest paths to remote routers, and creates a routing table based on the SPF tree. According to the link-state routing protocol, the Dijkstra algorithm is employed to calculate the SPF tree. The performance of Dijkstra algorithm scales as O((n + L) x log (n)), where L is the number of links in the network area of interest and n is the number of routers in that area.

However, since the LSA packet produced by a given router contains the status information of all outbound links of the router, the amount of link state information contained in the LSA packet increases significantly with an increase in the number of parallel links between neighbor routers. Further, each router transmits LSA packets on all of its parallel links. Therefore, the amount of routing control traffic increases in proportion to the square of the number of parallel links. In addition, since the SPF tree computations increase in proportion to the total number of links within the network area of interest, the increase in parallel links results in a significant increase in the amount of SPF tree computations.

A further problem is that if the link metric is inversely proportional to the link bandwidth, an appropriate route is not selected in the SPF tree calculation. For example, if routers A and B are connected by twenty links of 100 Mbps each and routers A and C are connected by a single link of 600 Mbps, the single A-C link will be selected preferentially over the A-B links due to the smaller value metric of the A-C link although the total bandwidth of the A-B links is greater. Although this problem could be solved by setting the total bandwidth of the A-B links as 2 Gbps, a link failure would affect the amount of available resource and the set value of total bandwidth does not represent the actual situation.

### SUMMARY OF THE INVENTION

It is therefore an object of the present invention to provide a method and system for routing packets in a network where routers are interconnected by parallel links by ensuring network scalability and stability while using the conventional link state routing algorithm.

The stated object is obtained by having the link state routing algorithm treat a plurality of parallel links as a single, bundled link, rather than as individual, component links.

According to a first aspect of the present invention, there is provided a method of routing packets in a communications network, wherein the network comprises a plurality of nodes which are interconnected by parallel component links, the method comprising the steps of grouping the parallel component links into a bundled link, and performing routing calculations according to a link state routing algorithm on using the bundled link as a unit of transmission medium.

According to a second aspect, the present invention provides a routing controller for routing packets in a communications network, wherein the network comprises a plurality of nodes which are interconnected by parallel component links. The routing controller comprises a link manager for grouping the parallel component links into a bundled link, and a routing module for performing routing calculations according to a link state routing algorithm using the bundled link as a unit of transmission medium.

For grouping and routing purposes, a first database is created for mapping a plurality of bundled links to a plurality of component links and a second database is created for mapping a plurality of destination addresses to a plurality of bundled links.

According to a third aspect, the present invention provides a router for routing packets in a communications network, wherein the network comprises a plurality of routers which are interconnected by parallel component links. The router comprises a routing controller, a plurality of interface units connected to the parallel component links, and a switch for switching an inbound hello packet from the interface units to the link manager and switching an outbound hello packet from the link manager to the interface units and switching a data packet between the interface units. The routing controller is arranged to group the parallel component links into a bundled link according to a link-up or link-down request and produces a first database and perform routing calculations according to a link state routing algorithm using the bundled link as a unit of transmission medium and produces a second database. The first and second databases are used in each interface unit for translating the header of the data packet.

To establish a reserved path through the network, the routing controller transmits a signaling packet containing a transfer list of nodes to a downstream neighbor node if the bundled link to this node has an idle component links. When the routing controller of the neighbor node receives the signaling packet, it sets up a connection in a matrix table according to the transfer list of the received packet if the bundled link to the next neighbor node has an idle component link.

One feature of the present invention is that the traffic of control packets exchanged between routers is reduced by treating parallel component links as a single bundled link even if there is a request for change in the number of component links if that change is insignificant for carrying data traffic.

Another feature of the present invention is that the time necessary for routing calculations is reduced even if there is a request for change in the number of component links if that change is insignificant for carrying data traffic.

Another feature of the present invention is that high speed table updating is possible in the event of a link failure by the provision of first and second databases, where the first database is one that is updated at low speed according to routing protocol and maps destination addresses to bundled links and the second database is one that can be updated at high speed and provides mapping of each bundled link to its component links.

A still further feature of the present invention is that the need for pre-setting IP interface address of a neighbor router is eliminated by exchanging hello packets on individual (component) links, containing IP interface addresses of bundled links.

A still further feature of the present invention is that the communications network provides scalable routing without requiring increase in memory, CPU processing burden and control traffic even though parallel links between neighbors are increased.

### BRIEF DESCRIPTION OF THE DRAWIGNS

The present invention will be described in detail further with reference to the following drawings, in which:
Fig. 1 is a block diagram of a communications network comprising routers interconnected by parallel component links which are grouped into bundled links;
Fig. 2 is a block diagram of a router of Fig. 1;
Fig. 3 is a block diagram of a routing module of the router;
Fig. 4 shows a component link (CL) management table used in the routing module for holding learned database created by exchanging hello packets over component links;
Fig. 5 is a flowchart of the operation of a component link (CL) manager of the routing module to perform hello packet exchanging with neighbor routers;
Fig. 6 is a sequence diagram for explaining a sequence of hello packets exchanged between two neighbor routers;
Fig. 7 shows a bundled link (BL) management table used in the routing module for holding information associated with bundled links when they are grouped according to routers;
Fig. 8 shows a BL-to-CL mapping table associated with the bundled link manager;
Fig. 9 is a flowchart of the operation of the bundled link (BL) manager to perform bundling of component links and reporting to a link-state routing controller when an event occurs in link topology;
Fig. 10 is a block diagram of each interface unit of Fig. 2;
Fig. 11 shows a modified BL management table for holding information associated with bundled links when they are grouped according to bandwidths;
Fig. 12 shows how the interface IP address of the BL management table of Fig. 11 is updated in a learning process;
Fig. 13 is a block diagram of a communications network comprising a plurality of routers interconnected by a network of optical cross-connect (routers) nodes;
Fig. 14 is a block diagram of the network of Fig. 13 in which the component optical links are grouped into bundled optical links, illustrating a wavelength path established through the cross-connect nodes;
Fig. 15 shows a CL management table provided in the cross-connect nodes;
Fig. 16 shows a BL management table provided in the routers of Fig. 13;
Fig. 17 is a flowchart of the operation of an optical cross-connect node when a matrix table is set for reserving network resource of a wavelength path; and
Figs. 18A and 18B are schematic diagrams illustrating part of the network of Fig. 13 to explain how a signaling packet is sent from a source router to a neighbor cross-connect node and then relayed to the next cross-connect node.

### DETAILED DESCRIPTION

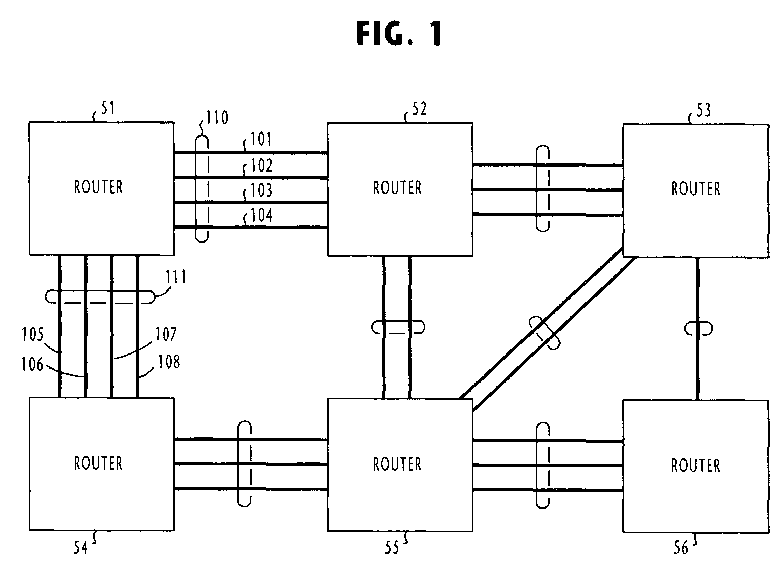

Referring to Fig. 1, there is shown an exemplary communications network of the present invention. The network is comprised of a plurality of interconnected routers 51 ~ 56. At least one communication link is used to interconnect neighbor routers of the network. In the illustrated example, the router 51 is interconnected with the neighbor router 52 by parallel links 101 ~ 104 and further interconnected by parallel links 105 ~ 108 with the neighbor router 54. Each router is uniquely identified by an IP address, or a router identifier RID.

In the present invention, communication links may be either physical transmission mediums or virtual connections established in an ATM network. The links having a common attribute are grouped into a "bundled link (BL)" and the links that constitute a bundled link are termed "component links (CL)". In the network, each bundled link is locally identified by a bundled link identifier BLID and each component link is locally assigned a component link identifier CLID. The BLID of a bundled link is globally represented by a concatenation of an interface IP address of the bundled link at the local end and a corresponding interface IP address of the link at the distant end.

According to one embodiment of the present invention, the parallel links that interconnect two neighboring routers of the same router identifiers are grouped into a bundled link. For example, the links 101 ~ 104 interconnecting the routers 51 and 52 are grouped into a bundled link 110 and the links 105 ~ 108 interconnecting the routers 51 and 54 are grouped into a bundled link 111. The grouping of interconnecting links into bundled links allows implementation of scalable routing control over the communication network of Fig. 1.

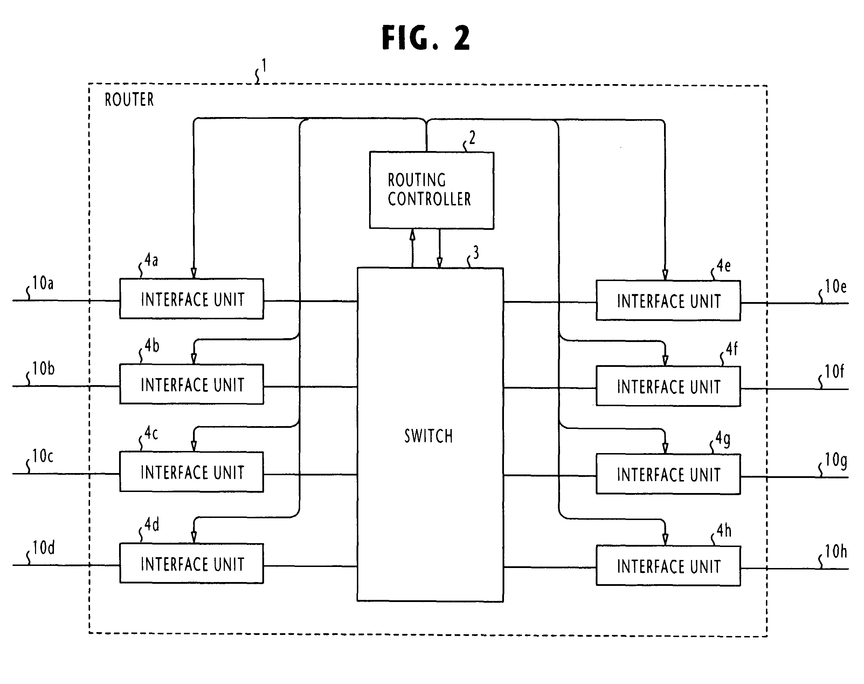

One router of the network of Fig. 1 is represented by numeral 1 in Fig. 2. The router 1 includes a routing controller 2, a switch 3 and a first group of interface units 4a ~ 4d connected between the switch 3 and component links 10a ~ 10d and a second group of interface units 4e ~ 4h connected between the switch 3 and component links 10e ~ 10h.

An inbound control packet, which is produced by the respective routing module of the neighbor routers, is received by one of the interface units 4 and routed through the switch 3 to the routing controller 2. In response, the routing controller 2 formulates and transmits an outbound control packet through the switch 3 to the interface unit where the inbound packet was received for transmission to the sending router. In this way, the routing controller 2 exchanges control packets with each of the neighbor routers on all parallel component links. Based on link state information and bundled link information contained in all inbound control packets, the routing controller 2 creates routing (mapping) tables and downloads them to all interface units 4a ~ 4h.

The routing table downloaded to each interface unit is examined when an inbound data packet is received from a neighbor router and the header of the data packet is translated according to the downloaded tables and launched into the switch 3. Switch 3 uses the header information of the packet for routing it to an appropriate interface unit for transmission.

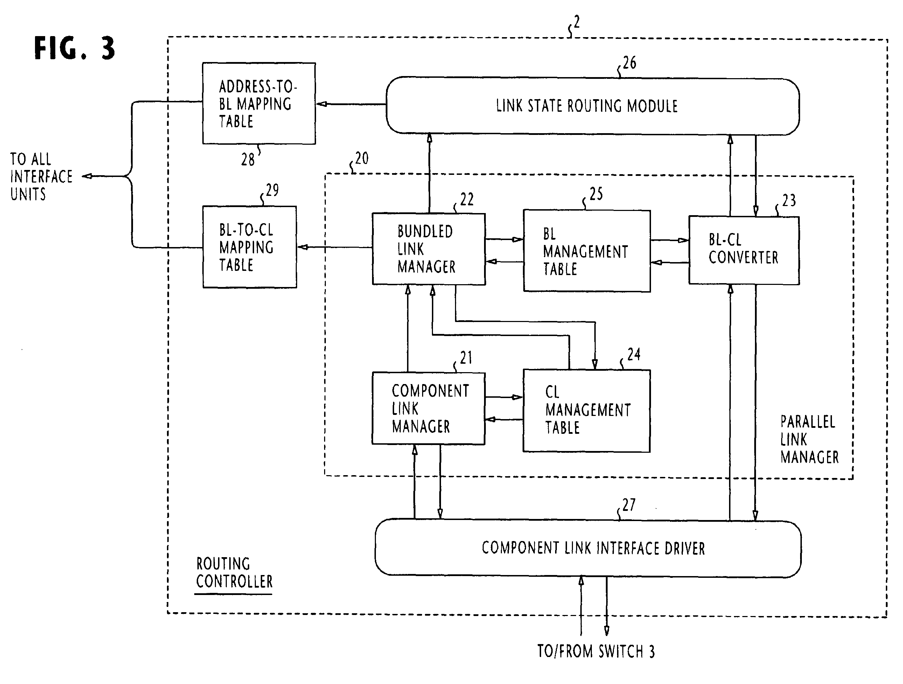

As shown in detail in Fig. 3, the routing controller 2 is comprised of a parallel link manager 20 which bundles component links having same attributes into a bundled link. A link state routing module 26 of the type known in the art is connected to the parallel link manager 20 to perform routing control on a per bundled link basis using information supplied from the parallel link manager 20, rather than on a per component link basis, by treating bundled links communicated from the BL manager 22 in the same way as the conventional routing module does. Thus, the routing controller performs routing calculations according to the link state routing algorithm using the bundled link as a network resource unit. Specifically, the processor 26 provides mapping of a plurality of destination addresses to a plurality of bundled links in an address-to-BL mapping table 28. The contents of the address-to-BL mapping table 28 are downloaded to all interface units 4a ~ 4h.

A component link (CL) interface driver 27 is provided for interfacing the parallel link manager 20 with the switch 3 to all control packets to be exchanged with all interface units 4a ~ 4h.

Parallel link manager 20 includes a link manager 21, a bundled link manager 22, and an interface converter 23. BL manager 22 and the bundled link- component link (BL-CL) converter 23 are associated with a bundled link management table 25. The bundled link manager 22 is connected to a BL-to-CL mapping table 29 for mapping a plurality of bundled links to a plurality of component links and informs the routing module 26 of the identifier of a bundled link it has determined in a manner as will be described. The contents of the BL-to-CL mapping table 29 are also downloaded to all interface units 4a ~ 4h.

The BL-CL converter 23 receives LSA packets from the routing module 26 as well as from the individual links 10 via the interface driver 27. In response to an LSA packet from the processor 26, the BL-CL converter 23 examines the BL management table 25 and selects a link from a bundled link that is specified by the LSA packet and hands it over to the interface driver 27 for transmission on the selected link. On the other hand, if an LSA packet is received from a given link 10 via the interface driver 27, the BL-CL converter 23 examines the BL management table 25 and hands it over to the routing module 26, indicating that an LSP packet has arrived on a bundled link of which the given link forms a part.

The CL manager 21 exchanges hello packets with neighbor routers through individual links 10. The hello packet contains a sending router identifier (SRID) which identifies the router that is transmitting a hello packet, a sending interface identifier (SIID) which is set equal to the IP address of the interface transmitting the hello packet, a neighbor router identifier (NRID) that identifies the neighbor router through which the hello packet is received, and a hello packet holding time (HHT) that specifies a time interval to indicate that if no hello packet is received between two neighbor routers during this interval the relationship between these neighbor routers is discarded.

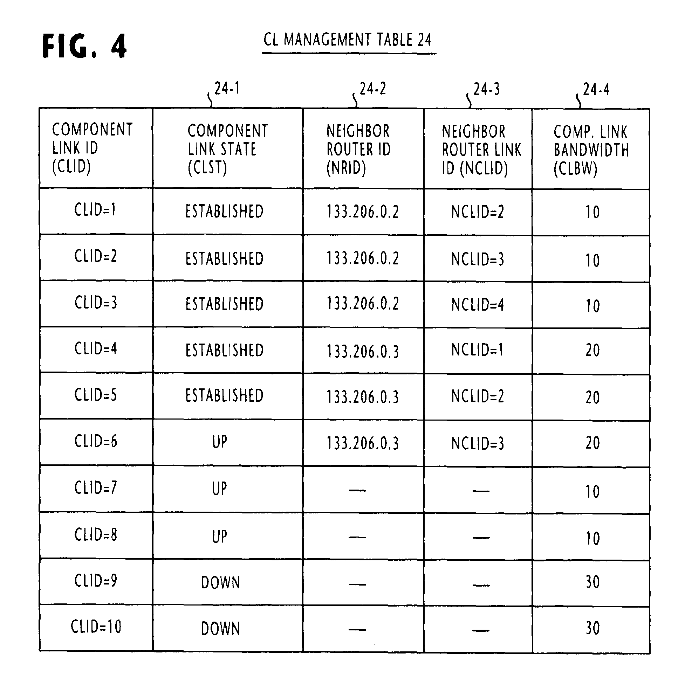

The CL manager 21 is associated with a component link management table 24. As shown in Fig. 4, the CL management table 24 has a plurality of entries corresponding to the component links 10a to 10h, identified by component link identifiers CLID=1 through CLID=10. Each entry is divided into fields 24-1 ~ 24-4 for setting a component link state (CLST), a neighbor router identifier (NRID), a neighbor router component link identifier (NCLID) and a link bandwidth (LBW), respectively. The CL state field 24-1 is initially set equal to DOWN state. When a neighbor relationship is established on a component link, the CL state field 24-1 of the corresponding entry is set equal to an ESTABLISHED state. If the CL manager 21 is informed that its lower layer is requesting a LINK-UP (or LINK-DOWN) state during the time a neighbor relationship is still not established, the CL state field 24-1 is set to an UP (or DOWN) state.

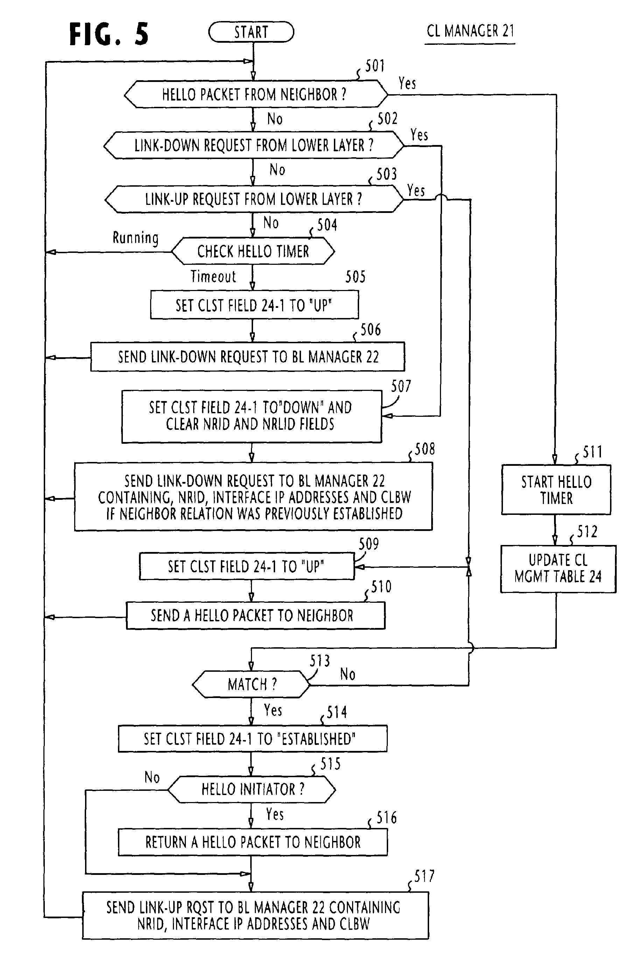

The CL manager 21 operates with the CL management table 24 according to the flowchart of Fig. 5.

When a hello packet is received from a neighbor router (step 501), the CL manager 21 starts a timer to start a hello timing operation (step 511), updates the CL management table 24 with the identifiers contained in the received hello packet (step 512), and checks to see if the neighbor router identifier (NRID) of the packet matches the identifier of its own router 1 (step 513). If the hello packet is the first one the router 1 receives from the sending neighbor router, the NRID field of the packet contains no identifier. Thus, the decision is negative at step 513 and steps 509 and 510 are repeated to change the CLST field to up-state and send back a reply hello packet to the sending router by setting the NRID field of the hello packet to the identifier of the neighbor router.

In a learning process, steps 501, 511 to 513, 509 and 510 or steps 501, 511 to 517 are repeated to create a database in the CL management table 24.

If the decision at step 513 is affirmative, the CL manager 21 proceeds to step 514 to set an "ESTABLISHED" state in the CL state field 24-1 of the entry corresponding to the component link on which the hello packet was received. If the router 1 is the one that initiated the exchanging of hello packets, the CL manager 21 makes an affirmative decision at step 515 and proceeds to step 516 to return a hello packet to the neighbor node by setting the SLID and NRID fields of the packet with the identifiers of the local router and the neighbor router, respectively. At step 517, the CL manager 21 sends a link-up request to the BL manager 22 containing the neighbor router ID and the bandwidth of the component link. If the router is not the initiator of hello packet exchange, the decision at step 515 is negative and flow proceeds to step 517, skipping step 516.

If no hello packet is received from a neighbor router, the CL manager 21 proceeds from step 501 to step 502 to check to see if a link-down request for a component link is received from its lower layer. If so, the CL state field 24-1 of the entry corresponding to the requested component link is set to DOWN state (step 507) and the NRID field 24-2 and NRLID field 24-3 of the entry are cleared. At step 508, the CL manager 21 sends a link-down request to the BL manager 22 containing the neighbor router ID, the local and neighbor interface IP addresses and the bandwidth of the component link if neighbor relationship was established before the CLST field is updated to down-state at step 507.

If no link-down request is received from the lower layer at step 502, the CL manager 21 checks, at step 503, to see if a link-up request for a link is received from the lower layer. If so, flow proceeds to step 509 to set the list state field 24-1 of an entry corresponding to the requested link and reads the NRLID and NRID of the entry. The CL manager 21 formulates a hello packet with the read identifiers and transmits it over a link requested by the lower layer (step 510).

If no link-up request is received at step 503, the link manager 21 proceeds to step 504 to check the hello timer, if neighbor relationship is established, to see if it is still running or timed out. If the timer is still running, control returns to the starting point of the routine. If the timer has run out, flow proceeds to step 505 to set the link state field of the link to UP state, and sends a link-down request to the BL manager 22 (step 506).

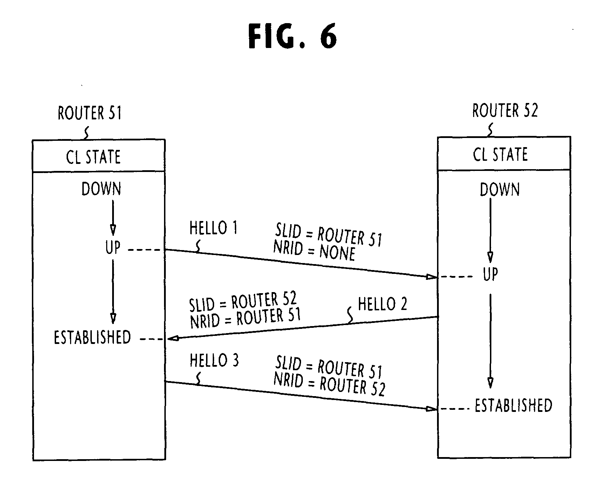

The CL manager 21 establishes a neighbor relationship between routers 51 and 52 in a manner as shown in the sequence diagram of Fig. 6 by assuming that the router 51 is the first to send a hello packet.

When the CL manager 21 of router 51 receives a link-up request from its lower layer (step 503, Fig. 5), it sets the CLST field 24-1 of CL management table 24 to up-state (step 59) and formulates a hello packet by setting the SRID (sending router identifier) field of the packet with the identifier of router 51 and leaving the NRID (neighbor router identifier) field vacant, and transmits the hello packet to the router 52 (step 510).

When the CL manager 21 of router 52 receives the first hello packet from router 51 (step 501), it starts the hello timer (step 511), updates its associated CL management table 24 with the identifiers contained in the first hello packet (step 512), changes the CLST field 24-1 of its associated CL management table from down- to up-state (steps 513, 509) and returns a second hello packet by setting its SRID and NRID fields with the identifiers of routers 52 and 51, respectively (step 510).

In response to the second hello packet from router 52 (step 501), the CL manager 21 of router 51 restarts the hello timer (step 511), updates the CL management table 24 (step 512) and sets the CLST field to ESTABLISHED state (steps 513, 514). Since the router 51 is the initiator of hello-packet exchange (step 515), it returns a third hello packet to router 52 by setting its SRID and NRID fields with the identifiers of routers 51 and 52, respectively (steps 515, 516) and sends a link-up request to its BL manager 22 containing the NRID, the local and neighbor interface IP addresses and CLBW (step 517).

In response to the third hello packet (501), the CL manager 21 of router 52 restarts the hello timer (step 511), updates its CL management table 24 (step 512) and sets the CLST field to ESTABLISHED state (steps 513, 514) and sends a link-up state to its BL manager 22 informing the NRID and CLBW (step 517).

When hello packets are exchanged over component links between neighbors, interface IP addresses are exchanged and a database is created in a learning process. Thus, network provider is freed from the trouble of manually pre-setting the bundled link management table of the optical cross-connect nodes with neighbor interface IP addresses when signaling packet is used to establish a wavelength path between routers.

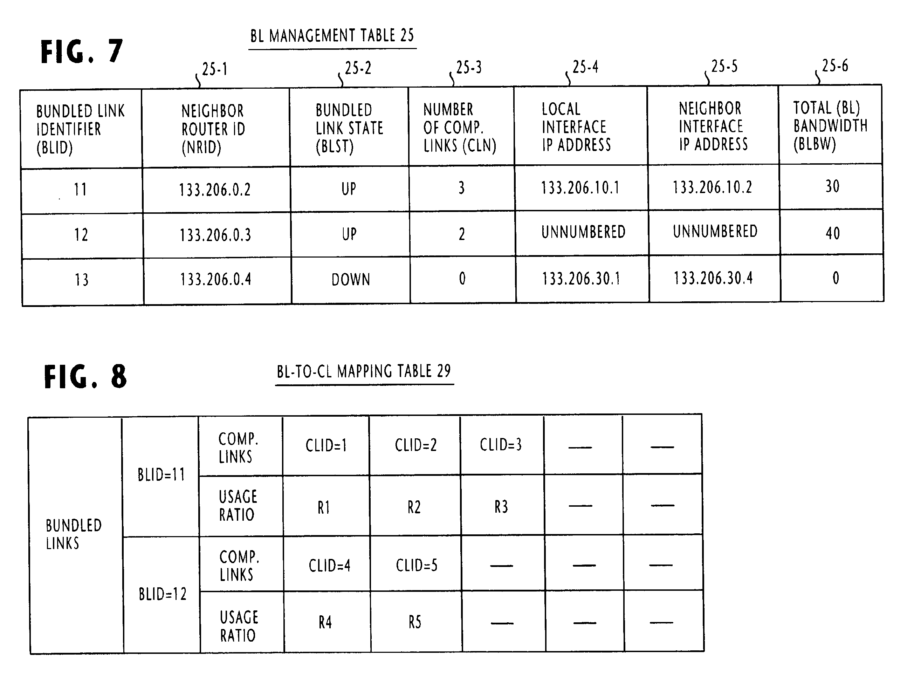

The BL manager 22 operates with the BL management table 25 to produce mapping data to be stored in the BL-to-CL mapping table 29. Figs. 7 and 8 show details of these tables. As shown in Fig. 7, the BL management table 25 has a plurality of entries corresponding to bundled links. For each bundled link, the corresponding entry is divided into a plurality of fields 25-1 ~ 25-6 for setting a neighbor router identifier (NRID), a bundled link state (UP or DOWN), the number of component links that comprise the bundled link, a local interface IP address and a neighbor interface IP address and a total bandwidth, respectively. In the BL-to-CL mapping table 29 defines relationships between a plurality of bundled links and corresponding component links as shown in Fig. 8. Since component links are bundled according to routers, the components links of each bundled link may have different bandwidths. Therefore, different usage ratios (R) are assigned to the component links to carry data packets depending on their bandwidths. For example, a bundled link BLID = 11 is mapped to component links CLID = 1, CLID = 2 and CLID = 3 and usage ratios R1, R2 and R3 are respectively assigned to these component links.

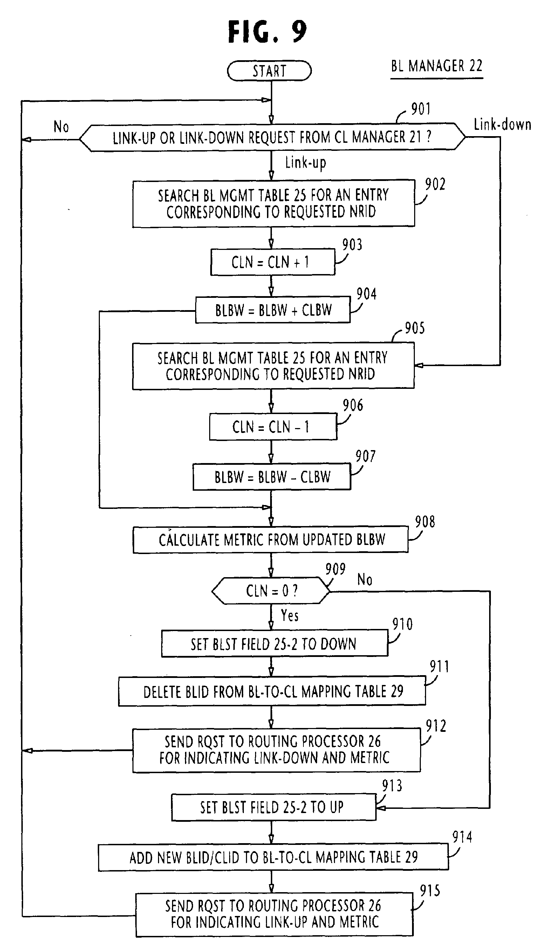

According to the flowchart of Fig. 9, the operation of the BL manager 22 starts with decision step 901 to determine if a link-up or link-down request for a component link is received from the CL manager 21.

If a link-up request is received, the BL manager 22 makes a search through the BL management table 25 for an entry that corresponds to the neighbor router identifier NRID contained in the request (step 902) and increments the number of component links by one (step 903). At step 904, the total bandwidth (BLBW) of the bundled link is summed with the bandwidth (CLBW) of the requested component link.

If a link-down request is received at step 901, the BL manager 22 makes a search through the BL management table 25 for an entry that corresponds to the neighbor router identifier NRID contained in the request (step 905) and decrements the number of component links by one (step 906) and subtracts the component link bandwidth from the total bandwidth at step 907.

Following the execution of step 904 or 907, flow proceeds to step 908 to calculate a metric value from the updated total bandwidth of the bundled link. The BL manager 22 determines whether the number of component links (CLN) of the bundled link is equal to zero. If CLN = 0, flow proceeds to step 910 to set the BLST (bundled link state) field 25-2 of the bundled link to down-state and the BLID of the bundled link is deleted from the BL-CL mapping table 29 (step 911). At step 912, the BL manager 22 sends a request to the routing module 26, indicating a link-down state of a BL link and the updated metric value, requesting the processor to delete the bundled link from the address-to-BL mapping table 28.

If the number of component links (CLN) is not equal to 0 (step 909), flow proceeds to step 913 to set the BLST field 25-2 of the bundled link to an up-state and adds a new BLID entry or a new CLID to the BL-CL mapping table 29 (step 914). At step 915, the BL manager 22 sends a request to the routing module 26 indicating a BL link-up state and the updated metric value for requesting the processor to update its table 28.

Note that some link-up events may be of such trivial nature that it is unnecessary to report an altered link topology to the routing module 26. To this end, an additional routine is preferably provided for checking the status of each component link at intervals to see if there is a change necessary to alter the contents of a bundled link by comparing link parameters with threshold values. If one or more link parameters exceed the thresholds, the BL manager 22 sends a link-up request to the routing module 26 with a metric value, requesting it to update the address-BL mapping table 28.

By the same token, it is advantageous not to report an event to the routing module 26 even though there is a change in a bundled link regarding the number of its component links. As a result, the amount of link state information to be exchanged between routers can be held at a minimum even if there is a change in the number of parallel links between them. This is implemented by assigning a metric of particular value to each bundled link independent of the number of its component links and maintaining the metric value of each bundled link constant even though the number of its component links has increased or decreased. For this purpose, the flowchart of Fig. 9 is modified in such a manner that step 908 is removed and steps 912 and 915 are altered not to report the metric value to the routing controller.

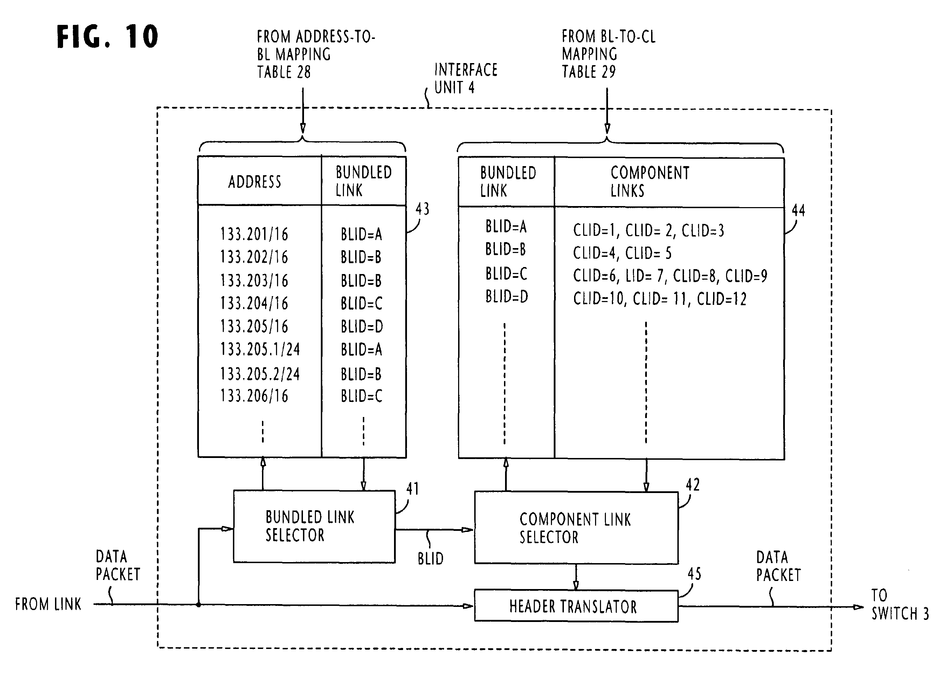

Fig. 10 shows details of each interface unit 4. Interface unit 4 is comprised of a bundled link selector 41 and a component link selector 42 connected in series between the associated component link and the switch 3. Interface unit 4 further includes first and second mapping tables 43 and 44 connected to the address-to-BL mapping table 28 and the BL-to-CL mapping 29, respectively. When the contents of each of the mapping tables 28 and 29 are created or updated, they are downloaded into the first and second mapping tables 43 and 44.

When a data packet arrives on the interface unit from the associated component link, the BL selector 41 makes a search through the first mapping table 43 for the same address as the destination address contained in the received data packet and reads a bundled link identifier (BLID) corresponding to the destination address. The read BLID is supplied from the BL selector 41 to the CL selector 42. Using the BLID from the selector 41 as a search key, the CL selector 42 makes a search through the second mapping table 44 for the same BLID and reads the corresponding component link identifiers (CLID) and selects one of these CLIDs. The selected CLID is inserted in the header of the data packet by a header translator 45 and the packet is sent to the switch 3. According to the translated header, the data packet is routed through the switch 3 to one of the interface units for transmission.

If one of the component links of a bundled link should fail, the usage ratios of the bundled link in the BL-CL mapping table 29 are updated so that the rest of the component links takes the burden of whole traffic of the bundled link. Since this updating process does not involve the routing module 26, the present invention compares favorably in terms of processing speed during a link failure with the prior art in which the routing controller performs time-consuming recalculations for updating its link-state routing table.

While router identifiers are used in the foregoing description for bundling parallel links so as to make them appear to the routing module 26 as a single transmission medium, other attributes could equally be as well employed for bundling parallel links, such as bandwidths, management groups, link priorities, and light wavelengths of WDM links.

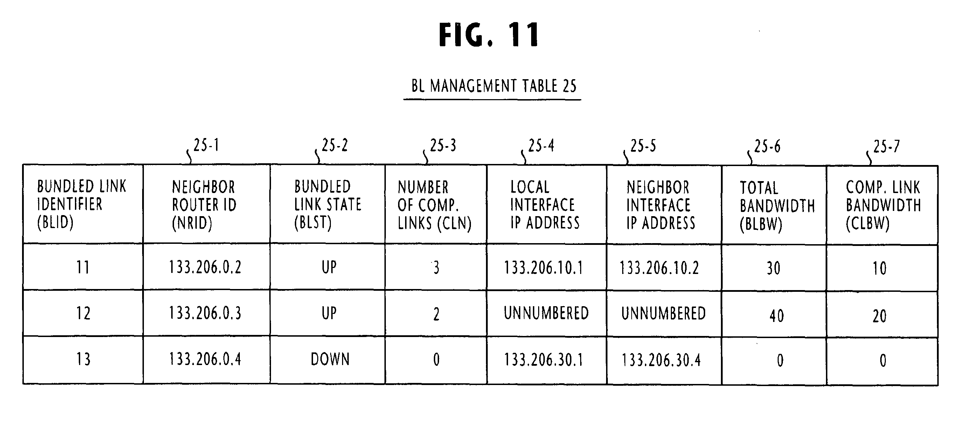

If bandwidth is used for bundling component links, the BL management table 25 may be modified as shown in Fig. 11 in which an additional field 25-7 is included to set component link bandwidth (CLBW). In response to a link-up or link-down request from the CL manager 21 for one of the component links of a bundled link, the BL manager 22 uses the CLBW field 25-7 of the bundled link for mapping the NRID of the requested component link in the BL-to-CL mapping table 29 to a BL entry whose CLBW value has the same bandwidth as the requested component link. Since the component links of the same bandwidth are grouped into the same bundled link, the usage ratios of BL-to-CL mapping table 29 are all set to an equal value.

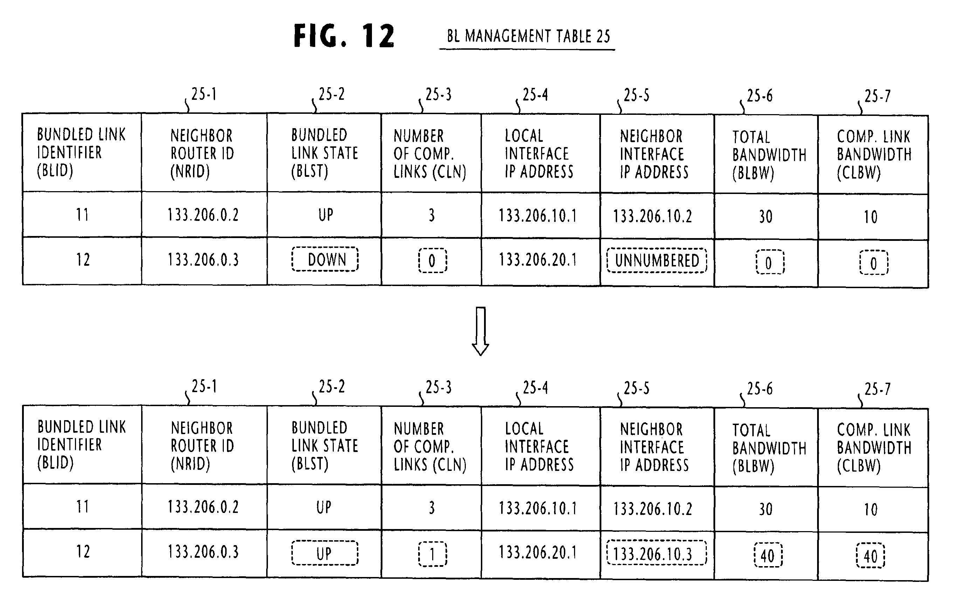

As discussed earlier, hello packets are exchanged at intervals to update the neighbor relationships. In this learning process, the neighbor interface IP address field of the BL management table 25 is also updated. Therefore, the neighbor interface IP address field of the modified BL management table 25 can be used to identify each of the component links of a bundled link, where the component links have the same bandwidth. When an existing neighbor relationship is updated, the routine of Fig. 9 is invoked and the BL management table 25 is updated (step 913). One example of this update is shown in Fig. 12 when a single component link is used to form a bundled link BLID = 12. This example update changes the BLST field 25-2 to link-up state, changes the neighbor interface IP address field 25-5 from "unnumbered" to "133.205.10.3" and sets "1" in the CLN (number of component links) field and bandwidth values in the bandwidth fields 25-6 and 25-7.

It will be seen that the present invention allows the communications network to provide scalable routing without requiring increase in memory, CPU processing burden and control traffic even though parallel links between neighbors are increased.

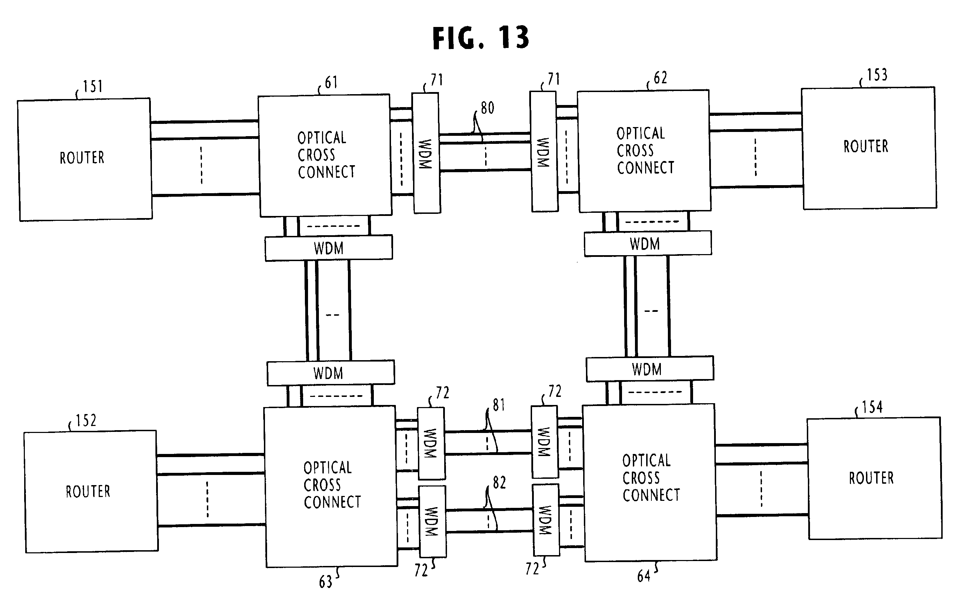

In a communications network where optical cross-connect (routers) nodes are used to establish relatively static connections between the routers of the present invention, the routing controller 2 is installed in each of the cross-connect nodes. One example of such a network is shown in Fig. 13, in which routers 151 ~ 154 of the present invention are interconnected by a network of optical cross-connect nodes 61 ~ 64, which are interconnected by wavelength division multiplexers. For example, optical links of cross-connect nodes 61 and 62 are multiplexed into at least one high-capacity wavelength path 80 by wavelength division multiplexers 71, and optical links of cross-connect nodes 63 and 64 may be multiplexed into groups 81 and 82 of high-capacity wavelength paths by two sets of wavelength division multiplexers 72.

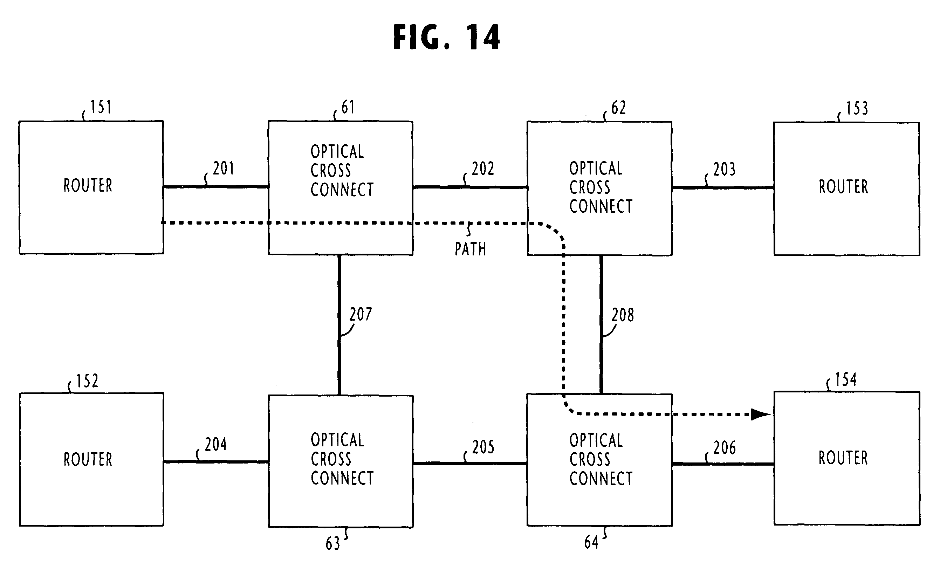

Optical cross-connect nodes 61 ~ 64 exchange hello packets with each other to learn optical link identifiers of neighbor nodes. As shown in Fig. 14, the routers 151 ~ 154 and cross-connect nodes 61 ~ 64 and forms a group of parallel optical component links of the same neighbor node identifiers or the same bandwidth identifiers into a plurality of bundled optical links 201 ~ 206.

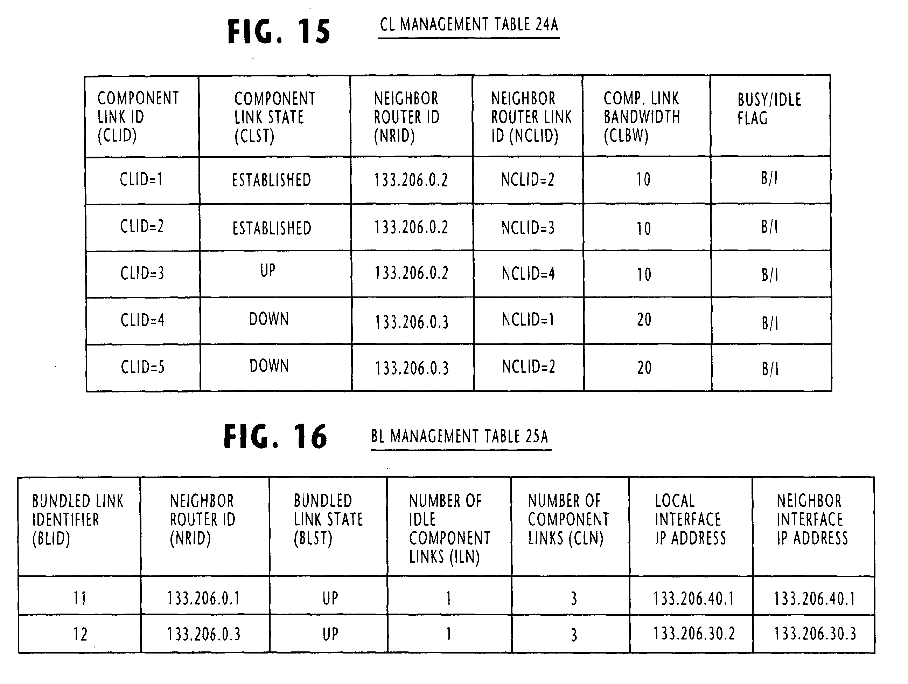

As shown in Fig. 15, a busy/idle status flag field are additionally provided in a modified CL management table 24A for indicating busy/idle status of each component (wavelength) links. As will be described below, the flags of CL management table 24A are examined by each cross-connect node for determining whether or not to establish a connection in a matrix table (not shown) between two component (wavelength) link identifiers (CLIDs) which identify inbound and outbound wavelength links.

Each of the optical cross-connect nodes has a modified BL management table 25A as shown in Fig. 16. In this table, an additional field is provided for setting the number of idle component links (ILN) for each bundled link entry. When a source router sends a signaling packet to establish a wavelength path to a destination router, it examines the ILN field of the BL management table 25A to determine if there is at least one idle component link in a bundled link that connects the source router to a neighbor cross-connect node. Preferably, neighbor routers at the local and distant end of a component link may use a component link identifier when transmitting a signaling packet. In this case, the router is not required to search the CL management table 24A to determine the local CLID.

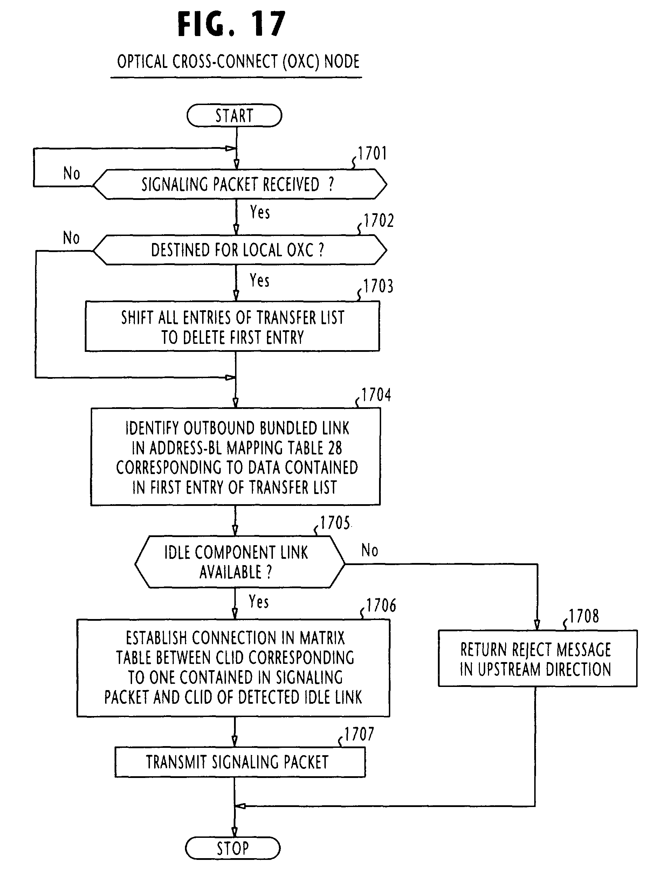

Fig. 17 is a flowchart for setting the matrix table in each optical cross-connect node in response to a signaling packet originated from a source router toward a destination router for establishing a wavelength path between the source and destination routers. Note that the wavelength path is a series of concatenated wavelength (component) links.

The signaling packet contains a CLID identifying a component link on which it is sent and a "transfer list" of entries which contain source and destination router identifiers, intermediate node identifiers and an interface IP address of a bundled link on which the signaling packet is to be sent. These entries are arranged in transfer order of the signaling packet.

When an optical cross-connect node receives a signaling packet (step 1701), it checks to see if the node is specified in the first entry of the packet (step 1702). If so, the node shifts all entries of the transfer list of the packet to delete the data contained in its first entry (step 1703). At step 1704, the node examines the address-BL mapping table 28 to identify an outbound bundled link corresponding to data now set in the first entry of the transfer list. At step 1705, the CL management table 24A is referenced to determine whether its flag field of the identified outbound bundled link contains an idle component (wavelength) link. If so, flow proceeds to step 1706 to establish a connection in the matrix table between the CLID corresponding to the CLID contained in the signaling packet and the CLID of the idle component link. The signaling packet is reformulated with a new CLID identifying the idle component link of the outbound bundled link and the interface IP address identifying the bundled link, and then transmitted downstream to the next node or router specified in the transfer list of the packet (step 1707). If the decision at step 1705 is negative, a reject message is returned in the upstream direction (1708).

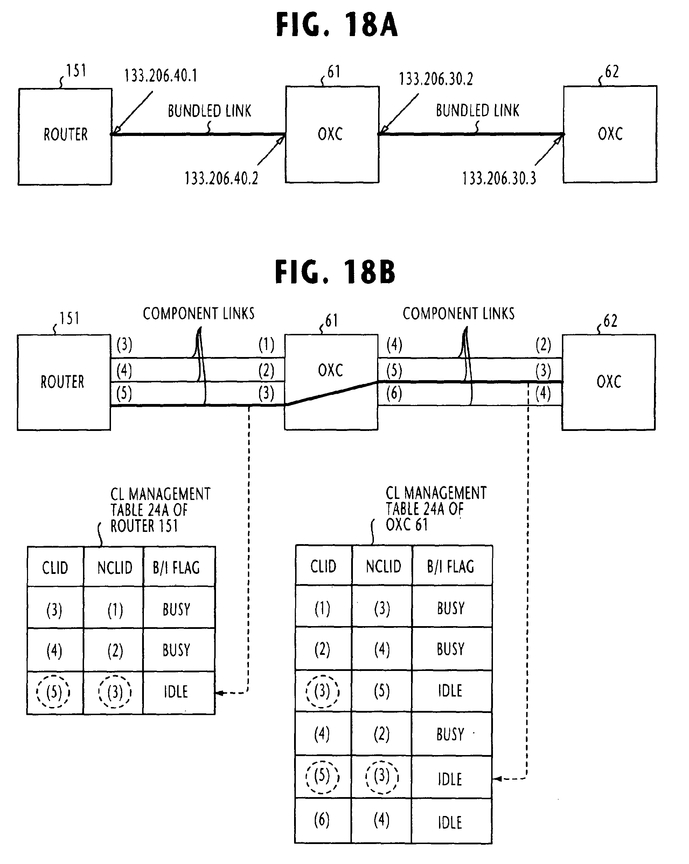

A typical example of signaling packet transmissions will be explained with reference to Figs. 18A and 18B by assuming that a signaling packet is sent from the router 151 toward the router 154 via nodes 61, 62 and 64 as indicated by a broken line 200.

Initially, the source router 151 examines the ICN field of the BL management table 25A to ascertain if the bundled link to the node 61 contains an idle component link. If there is an idle component, the source router 151 determines that a wavelength path can be established to the router 154 and formulates a transfer list containing entries for nodes 61, 62, 64 and router 54 arranged in the order named, and makes a search through the CL management table 24A for an idle component link that forms part of the bundled link connecting source router 151 to node 61. Router 151 formulates a signaling packet with the CLID (= 5) of the idle component link and an interface IP address "133.206.40.2" of the bundled link and sends the packet to cross-connect node 61.

On receiving the packet, the node 61 recognizes that its node identifier is given in the first entry of the transfer list and shifts all entries to delete the first entry so that the list contains the entries of nodes 62, 64 and router 154 and examines the CL management table 24A. Since the packet contains CLID = 5 and IP address = 133. 206. 40. 2, the node 61 recognizes that NCLID = 3 corresponds to CLID = 5, determines an outbound bundled link that connects to the next node 62 and selects a component link of CLID = 5 having an idle status flag indicated in the CL management table 24A. Node 61 updates its matrix table by establishing a connection between CLID = 3 on upstream side of the table and CLID = 5 on downstream side. Finally, the node 61 reformulates the signaling packet with the CLID = 5 of the selected component link and the IP address "133. 206. 30. 3" of the bundled link that connects to the next node 62, and transmits the packet to the node 62.

The operation of node 62 is similar to that of node 61. In response to the signaling packet form the node 61, the node 62 recognizes that its node identifier is found in the first entry of the transfer list and shifts all entries to delete the first entry so that the list contains the entries of nodes 64 and router 154 and examines the CL management table 24A. Since the packet contains CLID = 5 and IP address = 133. 206. 30. 3, the node 62 recognizes that NCLID = 3 corresponds to CLID = 5, determines an outbound bundled link that connects to the next node 64 and selects a component link having an idle status flag indicated in the CL management table 24A. Node 62 updates its matrix table by establishing a connection between CLID = 3 on upstream side of the table and the CLID of the idle component link on the next downstream side, and reformulates the signaling packet in a manner similar to that described above and transmits the packet to the node 64.

In this way, the signaling packet is transmitted to the node 64 and a wavelength path between routers 151 and 154 is reserved in the matrix tables of optical cross-connect nodes 61, 62 and 64.

## Claims

1. A method of routing packets in a communications network, wherein the network comprises a plurality of nodes which are interconnected by parallel component links, the method comprising the steps of:
a) grouping said parallel component links into a bundled link; and
b) performing routing calculations according to a link state routing algorithm on using said bundled link as a unit of transmission medium.

2. The method of claim 1, wherein step (a) further comprises the step of creating a first database in which a plurality of bundled links are mapped to a plurality of component links, and step (b) further comprises the step of creating a second database in which a plurality of destination addresses are mapped to a plurality of bundled links.

3. The method of claim 2, further comprising the step of receiving data packets arriving on said parallel component links and routing the data packets based on said first and second databases.

4. The method of claim 2, further comprising the steps of:
downloading said first and second databases to a plurality of interface units connected to said parallel component links; and
receiving data packets arriving on said parallel component links at said interface units and routing the data packets based on said downloaded first and second databases.

5. The method of any of claims 1 to 4, wherein step (a) comprises the step of exchanging hello packets between a pair of said nodes via said parallel component links and creating said first database in a learning process based on contents of the exchanged hello packets.

6. The method of any of claims 1 to 5, wherein the parallel component links are grouped into a plurality of bundled links corresponding to different ones of said plurality of nodes.

7. The method of any of claims 1 to 5, wherein the parallel component links are grouped into a plurality of bundled links corresponding to a plurality of different bandwidths.

8. The method any of claims 1 to 5, wherein the parallel component links are grouped into a plurality of bundled links corresponding to a plurality of different management groups.

9. The method any of claims 1 to 5, wherein the parallel component links are grouped into a plurality of bundled links corresponding to a plurality of different link priorities.

10. The method any of claims 1 to 5, wherein the parallel component links are grouped into a plurality of bundled links corresponding to a plurality of different light wavelengths.

11. The method of any of claims 1 to 10, wherein step (a) comprises the step of monitoring status of said parallel component links and grouping said parallel component links into said bundled link when there is a significant change in the monitored status.

12. The method of claim 7, wherein step (a) comprises the steps of maintaining a bundled link management table for storing a total bandwidth of said bundled link and grouping said parallel component links into said bundled link according to the stored total bandwidth, further comprising the step of defining a bundled link state according to said stored total bandwidth and performing step (b) according to the bundled link state and the stored total bandwidth.

13. The method of any of claims 5 to 12, wherein said bundled link is uniquely assigned an interface IP (internet protocol) address, and wherein said hello packets contain said interface IP address to all neighbor nodes to exchange interface IP addresses.

14. The method of any of claims 1 to 13, wherein said first database contains a node identifier identifying a neighbor node and a link identifier assigned by the neighbor node for identifying each of said parallel component links.

15. The method of any of claims 1 to 14, wherein each of said nodes is an optical cross-connect system and is arranged to send a signaling packet for establishing a wavelength path in said network, and wherein each of said parallel component links is assigned a common link identifier and said signaling packet contains the common link identifier for allowing neighbor nodes to identify a component link which interconnects the neighbor nodes.

16. The method of any of claims 1 to 15, wherein step (a) comprises:
responsive to a link-up request, incrementing a number of component links grouped into said bundled link and increasing said total bandwidth by an amount corresponding to a bandwidth of a requested component link;
responsive to a link-down request, decrementing said number of component links and decreasing said total bandwidth by an amount corresponding to a bandwidth of a requested component link; and
adding a component link requested by the link-up request to said bundled link if the number of component links grouped into said bundled link is greater than zero and removing a component link requested by the link-down request from the bundled link if the number of component links grouped into the bundled link is equal to zero.

17. The method of any of claims 1 to 16, further comprising the steps of:
transmitting a signaling packet to a downstream neighbor node if an idle outbound component link is available in a first one of the bundled links of the network, said signaling packet containing a transfer list of nodes; and
receiving said signaling packet from an upstream neighbor node and setting a connection in a matrix table according to the transfer list contained in the received signaling packet if an idle outbound component link is available in a second one of the bundled links.

18. A routing controller for routing packets in a communications network, wherein the network comprises a plurality of nodes which are interconnected by parallel component links, comprising:
a link manager (20) for grouping said parallel component links into a bundled link; and
a routing module (26) for performing routing calculations according to a link state routing algorithm using said bundled link as a unit of transmission medium.

19. The routing controller of claim 18, wherein the link manager creates a first database in which a plurality of bundled links are mapped to a plurality of component links, and said routing module creates a second database in which a plurality of destination addresses are mapped to a plurality of bundled links.

20. The routing controller of claim 19, wherein said link manager and said routing module are arranged to download said first and second databases to a plurality of interface units connected to said parallel component links to allows said interface units to translate header of data packets arriving on said parallel component links according to said downloaded first and second databases.

21. The routing controller of any of claims 19 and 20, wherein said link manager exchanges hello packets with a neighbor node via said parallel component links and creates said first database in a learning process based on contents of the exchanged hello packets.

22. The routing controller of any of claims 18 to 21, wherein the link manager groups said parallel component links into a plurality of bundled links corresponding to different ones of said plurality of nodes.

23. The routing controller of any of claims 18 to 21, wherein the link manager groups the parallel component links into a plurality of bundled links corresponding to a plurality of different bandwidths.

24. The routing controller of any of claims 18 to 21, wherein the link manager groups the parallel component links into a plurality of bundled links corresponding to a plurality of different management groups.

25. The routing controller of any of claims 18 to 21, wherein the link manager groups the parallel component links into a plurality of bundled links corresponding to a plurality of different link priorities.

26. The routing controller of any of claims 18 to 21, wherein the link manager groups the parallel component links into a plurality of bundled links corresponding to a plurality of different light wavelengths.

27. The routing controller of any of claims 18 to 26, wherein the link manager monitors status of said parallel component links and groups said parallel component links into said bundled link when there is a significant change in the monitored status.

28. The routing controller of any of claims 18 to 27, wherein the link manager groups said parallel component links into said bundled link according to a total bandwidth of the bundled link and defines a bundled link state according to the total bandwidth, and wherein the routing module performs said routing calculations according to the bundled link state and said total bandwidth of the bundled link.

29. The routing controller of any of claims 18 to 28, wherein said bundled link is uniquely assigned an interface IP (internet protocol) address, and wherein said hello packets contain said interface IP address to all neighbor nodes to exchange interface IP addresses.

30. The routing controller of any of claims 19 to 29, wherein said first database contains a node identifier identifying a neighbor node and a link identifier assigned by the neighbor node for identifying each of said parallel component links.

31. The routing controller of any of claims 28 to 30, wherein said link manager is arranged to:
increment a number of component links grouped into said bundled link in response to a link-up request,
increase said total bandwidth by an amount corresponding to a bandwidth of a component link requested by the link-up request,
decrement said number of component links in response to a link-down request,
decrease said total bandwidth by an amount corresponding to a bandwidth of a component link requested by the link-down request,
add a component link requested by the link-up request to said bundled link if the number of component links grouped into said bundled link is greater than zero, and
remove a component link requested by the link-down request from the bundled link if the number of component links grouped into the bundled link is equal to zero.

32. The routing controller of any of claims 18 to 31, wherein the link manager is arranged to:
transmit a signaling packet to a downstream neighbor node if an idle outbound component link is available in a first one of the bundled links of the network, said signaling packet containing a transfer list of nodes; and
receive said signaling packet from an upstream neighbor node and setting a connection in a matrix table according to the transfer list of the received signaling packet if an idle outbound component link is available in a second one of the bundled links.

33. A router for routing packets in a communications network, wherein the network comprises a plurality of said router which are interconnected by parallel component links, comprising:
a routing controller (2);
a plurality of interface units (4) connected to said parallel component links; and
a switch (3) for switching an inbound hello packet from said interface units to said routing controller and an outbound hello packet from the routing controller to said interface units and switching a data packet between said interface units,
said routing controller grouping said parallel component links into a bundled link according to a link-up or a link-down request and producing a first database and performing routing calculations according to a link state routing algorithm using said bundled link as a unit of transmission medium and producing a second database,
said interface units translating header of said data packet according to said first and second databases.

34. The router of claim 33, wherein said routing controller is configured according to any of claims 18 to 32.
